(19) Europäisches Patentamt / European Patent Office / Office européen des brevets

(11) **EP 3 579 111 A1**

(12) **EUROPEAN PATENT APPLICATION**
published in accordance with Art. 153(4) EPC

(43) Date of publication:
**11.12.2019 Bulletin 2019/50**

(51) Int Cl.:
*G06F 12/00* (2006.01)

(21) Application number: **18747430.9**

(22) Date of filing: **06.02.2018**

(86) International application number:
**PCT/CN2018/075376**

(87) International publication number:
**WO 2018/141304 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.02.2017 CN 201710066027**

(71) Applicant: **ZTE Corporation**
**Shenzhen, Guangdong 518057 (CN)**

(72) Inventors:
• **SHU, Jiwu**
  **Shenzhen**
  **Guangdong 518057 (CN)**
• **LUO, Shengmei**
  **Shenzhen**
  **Guangdong 518057 (CN)**
• **LU, Youyou**
  **Shenzhen**
  **Guangdong 518057 (CN)**
• **ZHANG, Jiacheng**
  **Shenzhen**
  **Guangdong 518057 (CN)**
• **YANG, Hongzhang**
  **Shenzhen**
  **Guangdong 518057 (CN)**

(74) Representative: **Rosenberg, Muriel Sylvie et al**
**Ipsilon**
**Le Centralis**
**63, avenue du Général Leclerc**
**92340 Bourg-la-Reine (FR)**

(54) **FLASH FILE SYSTEM AND DATA MANAGEMENT METHOD THEREOF**

(57) A flash file system and a data management method thereof are provided, the system including: a creation module (11), configured to divide a flash memory into a file system region and a flash buffer region when a file system is created; a marking module (12), configured to mark written data as dirty data in a memory buffer when the data are written and an amount of the written data is less than or equal to a preset marking threshold, wherein the marking threshold being used to indicate an amount of data that are written into the memory buffer and need to be marked according to data granularity; a synchronization module (13), configured to merge the dirty data in the memory buffer and write the same into the flash buffer region when data synchronization is required, and notify a backfilling module (14) when the flash buffer region is full; and the backfilling module (14), configured to read the dirty data in the flash buffer region when a notification is received from the synchronization module, write the dirty data into the file system region, and erase the flash buffer region.

| Creation module 11 | | Marking module 12 | | Synchronization module 13 | | Backfilling module 14 |

**FIG. 1**

**Description**

**TECHNICAL FIELD**

The present application relates to, but is not limited to, a field of storage technology, and in particular, to a flash file system and a data management method thereof.

**BACKGROUND**

A flash memory is an electrically erasable programmable memory which, compared with conventional disk media, has the characteristics of high read/write bandwidth, low access latency, low power consumption and high stability. Currently, the flash memory is more and more popular in data centers, personal computers, and mobile devices. The flash memory conducts read and write operations in units of pages, and a page needs to be erased before being rewritten by the flash memory. The erasion by the flash memory is conducted in units of blocks, where a flash block contains hundreds of flash pages. Each unit of the flash memory can withstand a limited number of erase operations, i.e., each flash unit has a limited lifetime.

In a file system, a page cache is used for caching the latest manipulated data to speed up the read and write process. When the data needs to be read, it is first determined in the page cache whether this content resides in the memory. If so, the data is directly returned; if not, then the data would be read from the flash memory. When a write operation is required, the data is no longer directly written into the device, but instead written into a page of the page cache which is later marked as a dirty page, and then return directly. The dirty page of the page cache is written into a flash memory device when a user issues a synchronous call or an operating system background thread initiates a synchronous operation.

**SUMMARY**

The following is a summary of the subject matter described in detail in the disclosure. This summary is not intended to limit the scope of claims.

Embodiments of the disclosure provide a flash file system and a data management method thereof that can avoid unnecessary data writing.

Technical solutions in the embodiments of the present disclosure are implemented as follows.

In an embodiment of the present disclosure, there is provided a flash file system, including: a creation module, a marking module, a synchronization module and a backfilling module, wherein the creation module is configured to divide a flash memory into a file system region and a flash buffer region when a file system is created; the marking module is configured to mark written data as dirty data in a memory buffer when the data are written and an amount of the written data is less than or equal to a preset marking threshold, wherein the marking threshold being used to indicate an amount of data that are written into the memory buffer and need to be marked according to data granularity; the synchronization module is configured to write, when data synchronization is required, the dirty data into the flash buffer region after merging all the dirty data or the dirty data of a file to be synchronized in the memory buffer, and notify the backfilling module when the flash buffer region is full; and the backfilling module is configured to read the dirty data in the flash buffer region when a notification is received from the synchronization module, write the dirty data into the file system region, and erase the flash buffer region.

In an embodiment, the flash buffer region includes a first flash buffer region and a second flash buffer region, wherein the synchronization module is configured to: write the dirty data into the first flash buffer region after merging all the dirty data in the memory buffer or the dirty data of the file to be synchronized in the memory buffer when data synchronization is required; send a first notification to the backfilling module when the first flash buffer region is full, and write the dirty data into the second flash buffer region after merging all the dirty data in the memory buffer or the dirty data of the file to be synchronized in the memory buffer when data synchronization is required; and send a second notification to the backfilling module when the second flash buffer region is full, and write the dirty data into the first flash buffer region after merging all the dirty data in the memory buffer or the dirty data of the file to be synchronized in the memory buffer when data synchronization is required; the backfilling module is configured to: read the dirty data in the first flash buffer region when the first notification is received from the synchronization module, write the dirty data into the file system region, and erase the first flash buffer region; and read the dirty data in the second flash buffer region when the second notification is received from the synchronization module, write the dirty data into the file system region, and erase the second flash buffer region.

In an embodiment, the marking module is configured to: encapsulate, when written data is present and an amount of the written data is less than or equal to the marking threshold, an inode number, and a page number of a data segment, a page offset, a length of the data segment and data of the data segment of a file corresponding to the written data as records, and add the records to a preset dirty data list; and increase a reference count of a memory buffer page corresponding to the written data by one.

In an embodiment, the synchronization module is configured to: search for all records of the file corresponding to the written data according to the inode number of the file, request a new memory page, sequentially copy contents of a plurality of records to the new memory page, and sequentially write the contents in the new memory page into the flash buffer region.

In an embodiment, the system further includes: a recovery module configured to detect whether dirty data is present in the flash buffer region when the flash file system is restarted; and read all the dirty data in the flash buffer region if dirty data is present in the flash buffer region, and update content of the memory buffer according to each piece of the dirty data.

In an embodiment of the present disclosure, there is further provided a data management method of a flash file system, including: dividing a flash memory into a file system region and a flash buffer region when a file system is created; marking written data as dirty data in a memory buffer when the data are written and an amount of the written data is less than or equal to a preset marking threshold, wherein the marking threshold being used to indicate an amount of data that are written into the memory buffer and need to be marked according to data granularity; writing, when data synchronization is required, the dirty data into the flash buffer region after merging all the dirty data or the dirty data of a file to be synchronized in the memory buffer; and reading the dirty data in the flash buffer region when the flash buffer region is full, writing the dirty data into the file system region, and erasing the flash buffer region.

In an embodiment, the flash buffer region includes a first flash buffer region and a second flash buffer region, wherein the dirty data is written into the first flash buffer region after merging all the dirty data in the memory buffer or the dirty data of the file to be synchronized in the memory buffer when data synchronization is required; the second flash buffer region is configured, when the first flash buffer region is full, as a current buffer used for writing data when data synchronization is required, while the dirty data in the first flash buffer region is read and written into the file system region, and the first flash buffer region is erased; and the first flash buffer region is configured, when the second flash buffer region is full, as the current buffer used for writing data when data synchronization is required, while the dirty data in the second flash buffer region is read and written into the file system region, and the second flash buffer region is erased.

In an embodiment, marking the written data as dirty data in the memory buffer includes: encapsulating an inode number, and a page number of a data segment, a page offset, a length of the data segment and data of the data segment of a file corresponding to the written data as records, and adding the records to a preset dirty data list; and increasing a reference count of a memory buffer page corresponding to the written data by one.

In an embodiment, writing the dirty data in the dirty data list into the flash buffer region after merging the dirty data includes: searching for all records of the file corresponding to the written data according to the inode number of the file, requesting a new memory page, sequentially copying contents of a plurality of records to the new memory page, and sequentially writing the contents in the new memory page into the flash buffer region.

In an embodiment, the data management method further includes: detecting whether dirty data is present in the flash buffer region when the flash file system is restarted; and reading all the dirty data in the flash buffer region if dirty data is present in the flash buffer region, and updating content of the memory buffer according to each piece of the dirty data.

The flash file system and the data management method thereof according to the embodiments of the present disclosure avoid unnecessary data writing by marking the dirty data and writing the dirty data into the flash memory after merging the dirty data, thereby reducing latency of the synchronous operations and improving lifetime of the flash memory.

Further, by providing the first and the second flash buffer regions, when the system backfills one of the flash buffer regions, the other acts as the current buffer into which the synchronous operations during this period are sequentially written, thereby avoiding a case where the whole system is stopped to wait due to the backfill. Alternative use of the two buffer regions ensures normal operation of the system.

Other aspects will become apparent upon reading and understanding the drawings and the detailed description.

## BRIEF DESCRIPTION OF THE DRAWINGS

FIG. 1 is a schematic structural diagram illustrating a flash file system provided in an embodiment of the present disclosure;

FIG. 2 is a schematic diagram illustrating a data structure of a flash file system provided in an embodiment of the present disclosure;

FIG. 3 is a schematic diagram illustrating a data structure of merged records according to an embodiment of the present disclosure;

FIG. 4 is a schematic diagram illustrating a structure of the data written into a flash buffer region according to an embodiment of the present disclosure;

FIG. 5 is a schematic diagram illustrating a data structure during a backfill operation according to an embodiment of the present disclosure;

FIG. 6 is a schematic structural diagram illustrating another flash file system provided in an embodiment of the present disclosure;

FIG. 7 is a schematic diagram illustrating a data structure during failure recovery according to an embodiment of the present disclosure; and

FIG. 8 is a schematic flowchart illustrating a data management method of a flash file system provided in an embodiment of the present disclosure.

## DETAILED DESCRIPTION

It should be understood that in the description of embodiments of the present disclosure, orientations or positions referred by terms "central", "longitudinal", "lateral", "upper", "lower", "front", "back", "left", "right", "vertical", "horizontal", "top", "bottom", "inside", "outside" and the like are based on the orientations or positions shown in the drawings, and are used merely for facilitating description of the embodiments of the disclosure and simplifying the description, instead of indicting or implying that the device or component referred to has a particular orientation or is configured and operates at a particular orientation, and thus cannot be interpreted as limitations to the present disclosure. Moreover, terms "first", "second", and the like are used for the purpose of illustration only and cannot be construed as indicating or implying a relative importance.

As used in the description of the embodiments of the disclosure, it is to be noted that terms "install", "connected to", and "connect" are to be interpreted broadly, and may refer to, for example, a fixed connection or a removable connection or an integral connection; or may refer to a mechanical connection or an electrical connection; or may refer to a direct connection, an indirect connection via an intermedium, or a communication between inner segments of two elements, unless explicitly stated or defined otherwise. Those ordinary skilled in the art may understand the specific meanings of the above terms in the embodiments of present disclosure according to specific context.

These and other aspects of the embodiments of disclosure will become apparent with reference to the following description and drawings. In the description and drawings, some particular implementations of the embodiments of the disclosure are disclosed to show some manners for implementing principles of the present disclosure. However, it should be understood that the embodiments of the present disclosure are not limited thereto. Rather, the embodiments of the present disclosure are intended to cover all variations, modifications and equivalents within the scope of the following claims.

Since a write operation may mark an entire page as a dirty page even if this write operation involves only a small portion of the page, the entire page is written into the flash memory device when a synchronous operation is performed. As a result, an amount of written data is greatly increased, which not only prolongs latency of the synchronous operation and reduces performance of the system, but also increases wear of the flash memory device and greatly reduces its lifetime.

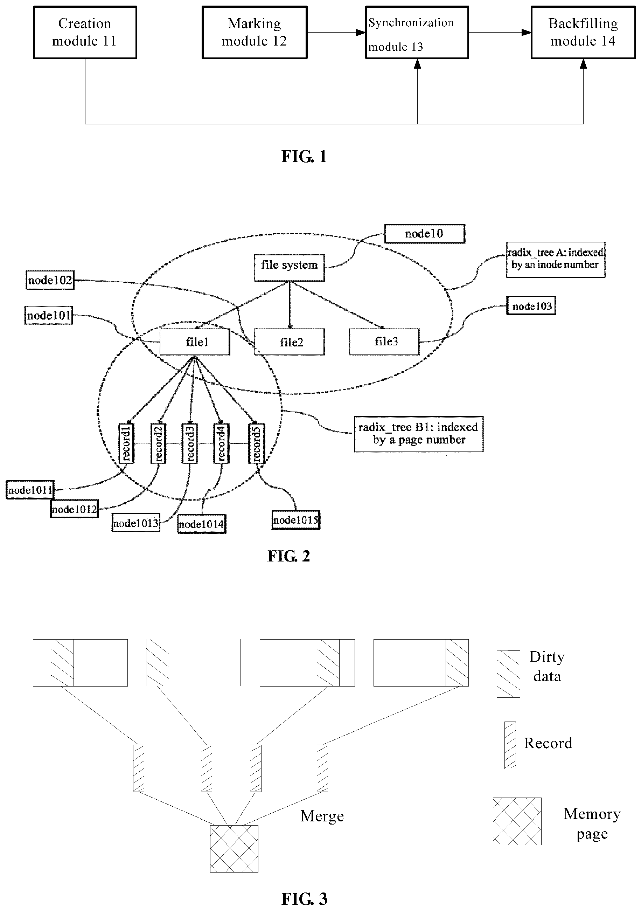

On this basis, as shown in FIG. 1, in an embodiment of the present disclosure, there is provided a flash file system, including: a creation module 11, a marking module 12, a synchronization module 13 and a backfilling module 14.

The creation module 11 is configured to divide a flash memory into a file system region and a flash buffer region when a file system is created.

The marking module 12 is configured to mark written data as dirty data in a memory buffer when the data are written and an amount of the written data is less than or equal to a preset marking threshold, wherein the marking threshold being used to indicate an amount of data that are written into the memory buffer and need to be marked according to data granularity.

The synchronization module 13 is configured to write, when data synchronization is required, the dirty data into the flash buffer region after merging all the dirty data or the dirty data of a file to be synchronized in the memory buffer, and notify the backfilling module when the flash buffer region is full.

The backfilling module 14 is configured to read the dirty data in the flash buffer region when a notification is received from the synchronization module, write the dirty data into the file system region, and erase the flash buffer region.

It is to be noted that the dirty data in embodiments of the present disclosure refers to data in the memory buffer that has been modified by a process. The file system uses pages as units of the memory buffer, and a page is marked as a dirty page when a process modifies the data in the page of the memory buffer. In an embodiment of the present disclosure, the written data is marked as dirty data in granularity of bytes, thereby avoiding unnecessary data writing.

In an embodiment, a size of the flash buffer region is specified by a user or preset by the system.

In an embodiment, if the size of the flash buffer region is specified by a user, a separate region is divided from the flash memory device when the file system is created and mounted as a buffer region according to a size parameter of the buffer region transferred by the user. When the file system performs a physical space allocation, none of the allocated space is within the flash buffer region. Therefore, the flash buffer region is not indexed by the file system.

In an embodiment, the flash buffer region includes a first flash buffer region and a second flash buffer region.

The synchronization module is configured to: write the dirty data into the first flash buffer region after merging all the dirty data in the memory buffer or the dirty data of a file to be synchronized in the memory buffer when data synchronization is required; send a first notification to the backfilling module when the first flash buffer region is full, and write the dirty data into the second flash buffer region after merging all the dirty data in the memory buffer or the dirty data of the file to be synchronized in the memory buffer when data synchronization is required; and send a second notification to the backfilling module when the second flash buffer region is full, and write the dirty data into the first flash buffer region after merging all the dirty data in the memory buffer or the dirty data of the file to be synchronized in the memory buffer when data synchronization is required.

The backfilling module is configured to: read the dirty data in the first flash buffer region when the first notification is received from the synchronization module, write the dirty data into the file system region, and erase the first flash buffer region; and read the dirty data in the second flash buffer region when the second notification is received from the synchronization module, write the dirty data into the file system region, and erase the second flash buffer region.

By providing two flash buffer regions, when the system backfills one of the flash buffer regions, the other acts as the current buffer into which the synchronous operations during this period are sequentially written, thereby avoiding a case where the whole system is stopped to wait due to the backfill. Alternative use of the two buffer regions ensures normal operation of the system.

In an embodiment, the memory buffer is a page cache.

In an embodiment, the marking module 12 is further configured to perform processing according to a current input/output (IO) path when written data is present and the amount of the written data is greater than the preset marking threshold.

In an embodiment of the disclosure, performing processing according to the current input/output (IO) path includes: writing the written data into a page cache, marking a page corresponding to the data as a dirty page, and return.

In an embodiment, a size of the marking threshold may be set according to a specific accelerated reading process. For example, the size of the marking threshold may be set to be half of a size of the memory page (4096*50%=2048 bytes), or 80% of the size of the memory page (4096*80%=3276.8 bytes).

In an embodiment, the marking module 12 is configured to: encapsulate an inode number, and a page number of a data segment, a page offset, a length of the data segment and data of the data segment of a file corresponding to the written data as records, i.e., in a form of <inode number, page number, page offset, length, data>, and add the records to a preset dirty data list when written data is present and an amount of the written data is less than or equal to the preset marking threshold; and increase a reference count of a corresponding page cache page by one.

It is to be noted that the marking module 12 of the embodiment of the present disclosure may mark dirty data using a preset dirty data list, or using other methods. The dirty data list may be in a form of any data structure, such as an array, a tree list, a linked list, or the like.

It is to be noted that when the marking module 12 adds the written data into the dirty data list, the corresponding page cache page is not marked as a dirty page. Instead, the reference count of the corresponding page cache page is compulsively increased by one, so that the written data in the page cache is not written into the flash memory device, thereby compulsively saving this portion of the page cache page for fast reading.

In an embodiment, the data of the data segment in the records may be specific data of the data segment, or may be a data pointer to a corresponding page of the page cache.

In an embodiment, the marking module 12 uses a radix_tree and a linked list to organize and manage all records of the same file. The radix_tree is intended for easy retrieval, while the linked list is intended to facilitate traversal. As a storage method of a Linux file system, the radix_tree is a less common data structure. The tree structure mainly contains three data pointers: a root data pointer: pointing to a root node of the tree; a free data pointer: pointing to a free node linked list; and a start data pointer: pointing to a free memory block. Each node in use is connected to each other using parent, left, and right data pointers, while the free nodes are connected to a linked list by the right data pointer. An inode is a data structure used in many Unix-like file systems. Each inode saves meta-information data for a file system object in the file system, but does not contain any data or file name.

As shown in FIG. 2, the marking module 12 maintains a radix_tree indexed by an inode number, where each of the respective nodes represents a file. To facilitate traversal, all leaf nodes in the radix_tree are linked by a linked list. Each node in the radix_tree further maintains a radix_tree indexed by a page number, where each node represents a record of a page. Each record contains five elements: an inode number, a page number, a page offset, a length of the data segment, and a data pointer to a corresponding page of the page cache, i.e., in the form of <inode number, page number, offset, length, data pointer>. To facilitate traversal, all records of a same file are linked by a linked list.

Upon receiving a write request, the marking module 12 is configured to retrieve in the radix_tree as shown in FIG. 2 according to the inode number of the current write operation. If a corresponding node is not found, a new node is created and inserted into the radix_tree and a linked list of the link nodes. Then, in the radix_tree of the node, the page number involved in this write operation is used as an index to search for a corresponding record. If the corresponding record is not found, a new record is created, and the inode number, the page number, the page offset, the length of the data segment, and the memory page data pointer are assigned corresponding values. If the corresponding record is found, the two records need to be merged. In this case, the inode number, the page number, and the memory page data pointer are unchanged, while the page offset and the length of the data segment are updated as follows:

$$\text{new offset} = \min (\text{old offset}, \text{current offset})$$

$$\text{new length} = \max (\text{old offset} + \text{old length}, \text{current offset} + \text{current length}) - \text{new offset}$$

where new offset indicates a page offset of the new record, old offset indicates a page offset of the original record, current offset indicates a page offset of the current write operation, new length indicates a length of the data segment of the new record, old length indicates a length of the data segment of the original record, and current length indicates a length of the data segment of the current write operation. One or more item values of the new record obtained based on the above conditions are inserted into the radix_tree and the linked list. The memory page in the page cache is then updated, but the page is no longer marked as dirty by the system to prevent the file system from writing the entire page of the memory page into the flash memory device. Since the page is no longer marked as dirty, there is a danger of being recycled by the file system at any time. In order to maintain efficient reading and consistency of data, the reference count of the memory page is compulsively increased by one, thereby compulsively ensuring that it will not be recycled. By this way, subsequent read operations still read through the page in the page cache.

In an embodiment, the synchronization module 13 is configured to: search for all records of the file corresponding to the written data according to the inode number of the file, request a new memory page, sequentially copy contents of a plurality of records to the new memory page, and sequentially write the contents in the new memory page into the flash buffer region.

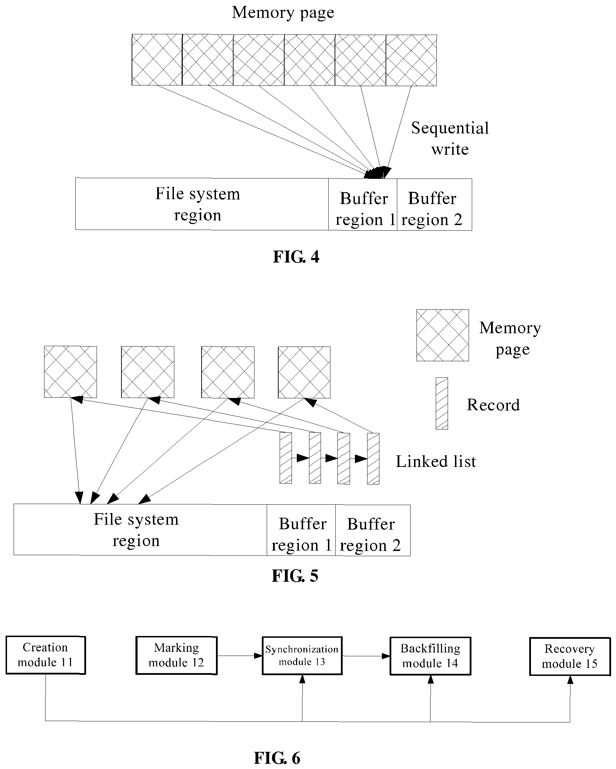

In an embodiment, as shown in FIG. 3, when data synchronization is required, the synchronization module 13 finds a corresponding node according to the inode number in the radix_tree as shown in FIG. 2, requests a new memory page, and then traverses all the records of the node. The data segment in the page cache for each record is copied from the page cache to the new memory page, and the current record information, including the inode number, the page number, the page offset, the length of the data segment, and other values, is also copied to the new memory page, and then the record structure is deleted from the data structure of FIG. 2. Then, referring to FIG. 4, the content in the new memory page is sequentially written into the flash buffer region. The above process is then repeated until all records belonging to the file are processed.

In an embodiment, when the content of the new memory page written into the flash buffer region is less than one page or does not have a size of an integer multiple of the memory page, meaningless data is filled so that the content of the new memory page takes an entire page or has a size of an integer multiple of the memory page.

In an embodiment, referring to FIG. 5, the backfilling module 14 is configured to: first traverse the data structure as shown in FIG. 2 upon receiving the notification from the synchronization module 13, then traverse all records of each of the nodes, each of the records pointing to a memory page in the page cache, and marks all the memory pages pointed by the records as dirty and reduces the reference count by one (creates a record upon receiving a write request, and increases the reference count of the memory page pointed by the record by one to compulsively save the memory page). The record is then deleted from the data structure of FIG. 2, and a node is deleted from the radix_tree when all records of the node are processed. The entire buffer region is erased when all nodes in the radix_tree are processed.

In an embodiment, referring to FIG. 6, the system further includes a recovery module 15 configured to detect whether dirty data is present in the flash buffer region when the flash file system is restarted; and read all the dirty data in the flash buffer region if dirty data is present in the flash buffer region, and update content of the memory buffer according to each piece of the dirty data.

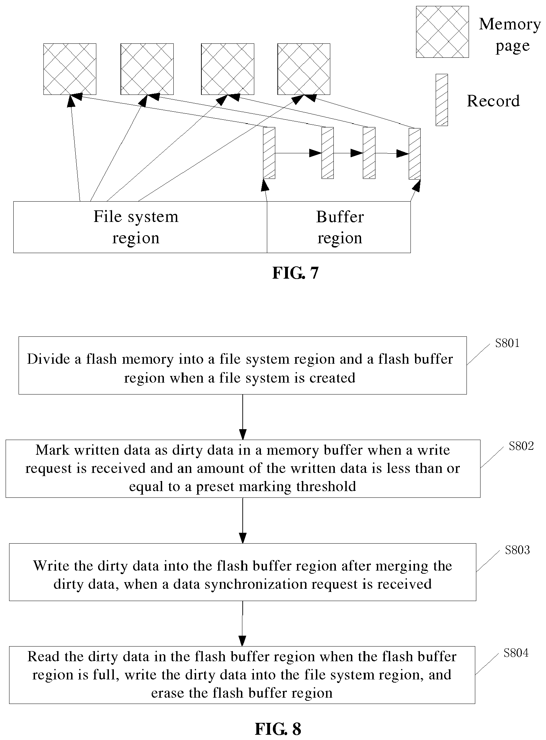

When an unexpected event such as a sudden power failure occurs, a system failure recovery is required. In an embodiment, as shown in FIG. 7, when the flash file system is restarted, the recovery module 15 detects whether dirty data is present in the flash buffer region. If dirty data is present in the flash buffer region, all records are read from the flash buffer region. For each of the records, the corresponding data (old data) is read from the file system region according to the inode number and the page number, and then content of the record is copied into the corresponding page cache page according to the page offset. The above process is repeated until all records are processed. At this point, the entire system has been restored to the latest state, and the failure recovery process is ended.

In an embodiment of the present disclosure, as shown in FIG. 8, there is further provided a data management method of a flash file system, including: steps S801-S804.

At step S801, a flash memory is divided into a file system region and a flash buffer region when a file system is created.

At step S802, when the data are written and an amount of the written data is less than or equal to a preset marking threshold, written data is marked as dirty data in a memory buffer, wherein the marking threshold being used to indicate an amount of data that are written into the memory buffer and need to be marked according to data granularity.

At step S803, after merging all the dirty data or the dirty data of a file to be synchronized in the memory buffer when data synchronization is required, the dirty data is written into the flash buffer region.

At step S804, when the flash buffer region is full, the dirty data in the flash buffer region is read, the dirty data is written into the file system region, and the flash buffer region is erased.

It is to be noted that the dirty data in embodiments of the present disclosure refers to data in the memory buffer that has been modified by a process. The file system uses pages as units of the memory buffer, and a page is marked as a dirty page when a process modifies the data in the page of the memory buffer. In an embodiment of the present disclosure, the written data is marked as dirty data in granularity of bytes, thereby avoiding unnecessary data writing.

In an embodiment, a size of the flash buffer region is specified by a user or preset by the system.

In an embodiment, if the size of the flash buffer region is specified by a user, a separate region is divided from the flash memory device when the file system is created and mounted as a buffer region according to a size parameter of the buffer region transferred by the user. When the file system performs a physical space allocation, none of the allocated space is within the flash buffer region. Therefore, the flash buffer region is not indexed by the file system.

In an embodiment, the flash buffer region includes a first flash buffer region and a second flash buffer region.

The dirty data is written into the first flash buffer region after merging all the dirty data in the memory buffer or the dirty data of the file to be synchronized in the memory buffer when data synchronization is required.

The second flash buffer region is configured, when the first flash buffer region is full, as a current buffer used for writing data when data synchronization is required, while the dirty data in the first flash buffer region is read and written into the file system region, and the first flash buffer region is erased.

The first flash buffer region is configured, when the second flash buffer region is full, as the current buffer used for writing data when data synchronization is required, while the dirty data in the second flash buffer region is read and written into the file system region, and the second flash buffer region is erased. By providing two flash buffer regions, when the system backfills one of the flash buffer regions, the other acts as the current buffer into which the synchronous operations during this period are sequentially written, thereby avoiding a case where the whole system is stopped to wait due to the backfill. Alternative use of the two buffer regions ensures normal operation of the system.

In an embodiment, the data management method further includes performing processing according to a current input/output (IO) path when written data is present and the amount of the written data is greater than the marking threshold.

In an embodiment of the disclosure, performing processing according to the current input/output (IO) path includes: writing the written data into a page cache, marking a page corresponding to the data as a dirty page, and return.

In an embodiment, the memory buffer is a page cache.

In an embodiment, a size of the marking threshold may be set according to a specific accelerated reading process. For example, the size of the marking threshold may be set to be half of a size of the memory page (4096*50%=2048 bytes), or 80% of the size of the memory page (4096*80%=3276.8 bytes).

In an embodiment, marking the written data as dirty data in the memory buffer includes: encapsulating an an inode number, and a page number of a data segment, a page offset, a length of the data segment and data of the data segment of a file corresponding to the written data as records, i.e., in a form of <inode number, page number, page offset, length, data>, and adding the records to a preset dirty data list; and increasing a reference count of a corresponding page cache page by one.

It is to be noted that the embodiment of the present disclosure may mark dirty data using a preset dirty data list, or using other methods. The dirty data list may be in a form of any data structure, such as an array, a tree list, a linked list, or the like.

It is to be noted that in the data management method of the embodiment of the present disclosure, when the written data is added into the dirty data list, the corresponding page cache page is not marked as a dirty page. Instead, the reference count of the corresponding page cache page is compulsively increased by one so that the written data in the page cache is not written into the flash memory device, thereby compulsively saving this portion of the page cache page for fast read.

In an embodiment, the data of the data segment in the record may be specific data of the data segment, or may be a data pointer to a corresponding page of the page cache.

In an embodiment, the data management method uses a radix_tree and a linked list to organize and manage all records of the same file. The radix_tree is intended for easy retrieval, while the linked list is intended to facilitate traversal. As a storage method of a Linux file system, the radix_tree is a less common data structure. The tree structure mainly contains three data pointers: a root data pointer: pointing to a root node of the tree; a free data pointer: pointing to a free node linked list; and a start data pointer: pointing to a free memory block. Each node in use is connected to each other using parent, left, and right data pointers, while the free nodes are connected to a linked list by the right data pointer. An inode is a data structure used in many Unix-like file systems. Each inode saves meta-information data for a file system object in the file system, but does not contain any data or file name.

As shown in FIG. 2, the file system of the embodiment of the present disclosure maintains a radix_tree A, where the radix_tree A is indexed by an inode number. Node 101 represents file 1, node 102 represents file 2, and node 103 represents file 3. File 1, file 2, and file 3 each maintain a radix_tree, which is called radix_tree B1, radix_tree B2, and radix_tree B3, respectively. Take the radix_tree B1 as an example: the radix_tree B1 is indexed by a page number, node 1011 represents a record 1, node 1012 represents a record 2, node 1013 represents a record 3, node 1014 represents a record 4, and node 1015 represents a record 5.

Each record contains 5 elements: an inode number, a page number, a page offset, a length of the data segment, and a data pointer to a corresponding page of the page cache, i.e., in the form of <inode number, page number, offset, length, data pointer>. To facilitate traversal, all records of the same file are linked by a linked list. As shown in FIG. 2, the file system of the embodiment of the present disclosure maintains a radix_tree indexed by an inode number, where each of the respective nodes 101 represents a file. To facilitate traversal, all nodes 101 in the radix_tree are linked by a linked list. Each node in the radix_tree further maintains a radix_tree indexed by a page number, where each node represents a record of a page. Each record contains five elements: an inode number, a page number, a page offset, a length of the data segment, and a data pointer to a corresponding page of the page cache, i.e., in the form of <inode number, page number, offset, length, data pointer>. To facilitate traversal, all records of a same file are linked by a linked list.

Upon data writing, a retrieve in the radix_tree as shown in FIG. 2 is conducted according to the inode number of the current write operation. If a corresponding node is not found, a new node is created and inserted into the radix_tree and a linked list of the link nodes. Then, in the radix_tree of the node, the page number involved in this write operation is used as an index to search for a corresponding record. If the corresponding record is not found, a new record is created, and the inode number, the page number, the page offset, the length of the data segment , and the memory page data pointer are assigned corresponding values. If the corresponding record is found, the two records need to be merged. In this case, the inode number, the page number, and the memory page data pointer are unchanged, while the page offset and the length of the data segment are updated as follows:

$$\text{new offset} = \min (\text{old offset, current offset})$$

$$\text{new length} = \max (\text{old offset} + \text{old length, current offset} + \text{current length}) - \text{new offset}$$

where new offset indicates a page offset of the new record, old offset indicates a page offset of the original record, current offset indicates a page offset of the current write operation, new length indicates a length of the data segment of the new record, old length indicates a length of the data segment of the original record, and current length indicates a length of the data segment of the current write operation. One or more item values of the new record obtained based on the above conditions are inserted into the radix_tree and the linked list. The memory page in the page cache is then updated, but the page is no longer marked as dirty by the system to prevent the file system from writing the entire page of the memory page into the flash memory device.. Since the page is no longer marked as dirty, there is a danger of being recycled by the file system at any time. In order to maintain efficient reading and consistency of data, the reference count of the memory page is compulsively increased by one, thereby compulsively ensuring that it will not be recycled. By this way, subsequent read operations still read through the page in the page cache.

In an embodiment, writing the dirty data of the file to be synchronized into the flash buffer region after merging the dirty data includes: searching for all records of the file corresponding to the written data according to the inode number of the file, requesting a new memory page, sequentially copying contents of a plurality of records to the new memory page, and sequentially writing the contents in the new memory page into the flash buffer region.

In an embodiment, as shown in FIG. 3, when data synchronization is required, a corresponding node searched for according to the inode number in the radix_tree as shown in FIG. 2, a new memory page is requested, and then all the records of the node are traversed. The data segment in the page cache for each record is copied from the page cache to the new memory page, and the current record information, including the inode number, the page number, the page offset, the length of the data segment, and other values, is also copied to the new memory page, and then the record structure is deleted from the data structure of FIG. 2. Then, referring to FIG. 4, the content in the new memory page is sequentially written into the flash buffer region. The above process is then repeated until all records belonging to the file are processed.

In an embodiment, when the content of the new memory page written into the flash buffer region is less than one page or does not have a size of an integer multiple of the memory page, meaningless data is filled so that the content of the new memory page takes an entire page or has a size of an integer multiple of the memory page.

In an embodiment, when the current buffer region is full, as shown in FIG. 5, first, the data structure shown in FIG. 2 is traversed, then all records of each of the nodes are traversed, each of the records pointing to a memory page in the page cache, all the memory pages pointed by the records are marked as dirty pages and the reference count is reduced by one (a record is created upon receiving a write request, and the reference count of the memory page pointed by the record is increased by one to compulsively save the memory page), and the dirty pages are written into the file system region. The record is then deleted from the data structure of FIG. 2, and a node is deleted from the radix_tree when all records of the node are processed. The entire buffer region is erased when all nodes in the radix_tree are processed.

In an embodiment, the data management method further includes detecting whether dirty data is present in the flash buffer region when the flash file system is restarted; and reading all the dirty data in the flash buffer region if dirty data is present in the flash buffer region, and updating content of the memory buffer according to each piece of the dirty data.

When an unexpected event such as a sudden power failure occurs, a system failure recovery is required. In an embodiment, as shown in FIG. 7, when the flash file system is restarted, it is detected whether dirty data is present in the flash buffer region. If dirty data is present in the flash buffer region, all records are read from the flash buffer region. For each of the records, the corresponding data (old data) is read from an index region of the file system according to the inode number and the page number, and then content of the record is copied into the corresponding page cache page according to the page offset. The above process is repeated until all records are processed. At this point, the entire system has been restored to the latest state, and the failure recovery process is ended.

The flash file system and the data management method thereof according to the embodiments of the present disclosure avoid unnecessary data writing by marking the dirty data and writing the dirty data into the flash memory after merging the dirty data, thereby reducing latency of the synchronous operations and improving lifetime of the flash memory.

In an embodiment, by providing the first and the second flash buffer regions, when the system backfills one of the flash buffer regions, the other acts as the current buffer into which the synchronous operations during this period are sequentially written, thereby avoiding a case where the whole system is stopped to wait due to the backfill. Alternative use of the two buffer regions ensures normal operation of the system.

In an embodiment of the present disclosure, there is further provided a computer readable storage medium storing computer executable instructions for implementing, when executed by a processor, the method of the embodiment as described above.

Those of ordinary skill in the art will appreciate that all or some steps of the above described method, functional modules/units in the system and apparatus may be implemented as software, firmware, hardware, and suitable combinations thereof. In a hardware implementation, the division between the functional modules/units mentioned in the above description does not necessarily correspond to the division of physical units; for example, a physical component may have multiple functions, or a function or step may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer readable medium which may include a computer storage medium (or non-transitory medium) and communication medium (or transitory medium). As is well known to those of ordinary skill the art, the term computer storage medium includes volatile and nonvolatile, removable and non-removable medium implemented in any method or technology for storing information, such as computer readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those skilled in the art that communication medium typically includes a computer readable instruction, a data structure, a program module, or other data in a modulated data signal, such as a carrier wave or other transport mechanism, and may include any information delivery medium.

The descriptions above are merely optional embodiments of the present disclosure, which are not intended to limit the present disclosure. For those skilled in the art, the present disclosure may have various changes and variations. Any amendments, equivalent substitutions, improvements, etc. within the principle of the disclosure are all included in the scope of the protection of the disclosure. One of ordinary skill in the art would appreciate that all or part of the steps described above may be implemented by a program stored in a computer readable storage medium for instructing the associated hardware, such as a read-only memory, a magnetic or optical disk, and the like. In an embodiment, all or part of the steps in the above embodiments may also be implemented by one or more integrated circuits. Accordingly, respective modules/units in the above embodiments may be implemented in the form of hardware, or in the form of a software function module. The present disclosure is not limited to any particular combination form of hardware and software.

**INDUSTRIAL APPLICABILITY**

The embodiments of the present disclosure avoid unnecessary data writing, thereby reducing latency of the synchronous operations and improving lifetime of the flash memory. Further, alternative use of the two buffer regions ensures normal operation of the system.

**Claims**

1. A flash file system, comprising: a creation module (11), a marking module (12), a synchronization module (13), and a backfilling module (14), wherein

   the creation module (11) is configured to divide a flash memory into a file system region and a flash buffer region when a file system is created;
   the marking module (12) is configured to mark written data as dirty data in a memory buffer when the data are written and an amount of the written data is less than or equal to a preset marking threshold, wherein the marking threshold being used to indicate an amount of data that are written into the memory buffer and need to be marked according to data granularity;
   the synchronization module (13) is configured to write, when data synchronization is required, the dirty data into the flash buffer region after merging all the dirty data in the memory buffer or the dirty data of a file to be synchronized in the memory buffer, and notify the backfilling module (14) when the flash buffer region is full; and
   the backfilling module (14) is configured to read the dirty data in the flash buffer region when a notification is received from the synchronization module (13), write the dirty data into the file system region, and erase the flash buffer region.

2. The flash file system according to claim 1, wherein the flash buffer region comprises a first flash buffer region and a second flash buffer region, wherein

   the synchronization module (13) is configured to: write the dirty data into the first flash buffer region after merging all the dirty data in the memory buffer or the dirty data of the file to be synchronized in the memory buffer when data synchronization is required; send a first notification to the backfilling module (14) when the first flash buffer region is full, and write the dirty data into the second flash buffer region after merging all the dirty data in the memory buffer or the dirty data of the file to be synchronized in the memory buffer when data synchronization is required; and send a second notification to the backfilling module (14) when the second flash buffer region is full, and write the dirty data into the first flash buffer region after merging all the dirty data in the memory buffer or the dirty data of the file to be synchronized in the memory buffer when data synchronization is required; and
   the backfilling module (14) is configured to: read the dirty data in the first flash buffer region when the first notification is received from the synchronization module (13), write the dirty data into the file system region, and erase the first flash buffer region; and read the dirty data in the second flash buffer region when the second notification is received from the synchronization module (13), write the dirty data into the file system region, and erase the second flash buffer region.

3. The flash file system according to claim 1, wherein the marking module (12) is configured to: encapsulate, when written data is present and an amount of the written data is less than or equal to the marking threshold, an inode number, and a page number of a data segment, a page offset, a length of the data segment and data of the data segment of a file corresponding to the written data as records, and add the records to a preset dirty data list; and increase a reference count of a memory buffer page corresponding to the written data by one.

4. The flash file system according to claim 3, wherein the synchronization module (13) is configured to:
   search for all records of the file corresponding to the written data according to the inode number of the file, request a new memory page, sequentially copy contents of a plurality of records to the new memory page, and sequentially write the contents in the new memory page into the flash buffer region.

**5.** The flash file system according to claim 1, further comprising:
a recovery module (15) configured to detect whether dirty data is present in the flash buffer region when the flash file system is restarted; and read all the dirty data in the flash buffer region if dirty data is present in the flash buffer region, and update content of the memory buffer according to each piece of the dirty data.

**6.** A data management method of a flash file system, comprising:

dividing a flash memory into a file system region and a flash buffer region when a file system is created (S801);
marking written data as dirty data in a memory buffer when the data are written and an amount of the written data is less than or equal to a preset marking threshold, wherein the marking threshold being used to indicate an amount of data that are written into the memory buffer and need to be marked according to data granularity (S802);
writing, when data synchronization is required, the dirty data into the flash buffer region after merging all the dirty data or the dirty data of a file to be synchronized in the memory buffer (S803); and
reading the dirty data in the flash buffer region when the flash buffer region is full, writing the dirty data into the file system region, and erasing the flash buffer region (S804).

**7.** The data management method according to claim 6, wherein: the flash buffer region comprises a first flash buffer region and a second flash buffer region, wherein

the dirty data is written into the first flash buffer region after merging all the dirty data in the memory buffer or the dirty data of the file to be synchronized in the memory buffer when data synchronization is required;
the second flash buffer region is configured, when the first flash buffer region is full, as a current buffer used for writing data when data synchronization is required, while the dirty data in the first flash buffer region is read and written into the file system region, and the first flash buffer region is erased; and
the first flash buffer region is configured, when the second flash buffer region is full, as the current buffer used for writing data when data synchronization is required, while the dirty data in the second flash buffer region is read and written into the file system region, and the second flash buffer region is erased.

**8.** The data management method according to claim 6, wherein: marking the written data as dirty data in the memory buffer comprises: encapsulating an inode number, and a page number of a data segment, a page offset, a length of the data segment and data of the data segment of a file corresponding to the written data as records, and adding the records to a preset dirty data list; and increasing a reference count of a memory buffer page corresponding to the written data by one.

**9.** The data management method according to claim 8, wherein: writing the dirty data in the dirty data list into the flash buffer region after merging the dirty data comprises:
searching for all records of the file corresponding to the written data according to the inode number of the file, requesting a new memory page, sequentially copying contents of a plurality of records to the new memory page, and sequentially writing the contents in the new memory page into the flash buffer region.

**10.** The data management method according to claim 6, further comprising:

detecting whether dirty data is present in the flash buffer region when the flash file system is restarted; and
reading all the dirty data in the flash buffer region if dirty data is present in the flash buffer region, and updating content of the memory buffer according to each piece of the dirty data.

**11.** A computer readable storage medium storing computer executable instructions for implementing, when executed by a processor, the method according to any one of claims 6 to 10.

FIG. 1

FIG. 2

FIG. 3

Memory page

**FIG. 4**

**FIG. 5**

**FIG. 6**

Memory
page

Record

File system
region

Buffer
region

**FIG. 7**

| Divide a flash memory into a file system region and a flash buffer region when a file system is created | S801 |

| Mark written data as dirty data in a memory buffer when a write request is received and an amount of the written data is less than or equal to a preset marking threshold | S802 |

| Write the dirty data into the flash buffer region after merging the dirty data, when a data synchronization request is received | S803 |

| Read the dirty data in the flash buffer region when the flash buffer region is full, write the dirty data into the file system region, and erase the flash buffer region | S804 |

**FIG. 8**

**EP 3 579 111 A1**

# INTERNATIONAL SEARCH REPORT

International application No.

PCT/CN2018/075376

## A. CLASSIFICATION OF SUBJECT MATTER

G06F 12/00 (2006.01) i

According to International Patent Classification (IPC) or to both national classification and IPC

## B. FIELDS SEARCHED

Minimum documentation searched (classification system followed by classification symbols)

G06F 12/-

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 闪存, 分, 缓存, 缓冲, 脏数据, 写, 回填, 回写, 写回, flash, divid+, separat+, partition+, cache, buffer, dirty data, writ+, back

## C. DOCUMENTS CONSIDERED TO BE RELEVANT

| Category* | Citation of document, with indication, where appropriate, of the relevant passages | Relevant to claim No. |
|---|---|---|
| X | CN 102725752 A (HUAWEI TECHNOLOGIES CO., LTD.) 10 October 2012 (10.10.2012), description, paragraphs [0024]-[0082] | 1, 5, 6, 10, 11 |
| A | CN 102725752 A (HUAWEI TECHNOLOGIES CO., LTD.) 10 October 2012 (10.10.2012), entire document | 2-4, 7-9, 11 |
| A | CN 102841851 A (SHENZHEN NETCOM ELECTRONICS CO., LTD.) 26 December 2012 (26.12.2012), entire document | 1-11 |
| A | CN 102063271 A (DAWNING INFORMATION INDUSTRY (BEIJING) CO., LTD.) 18 May 2011 (18.05.2011), entire document | 1-11 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April 2018 | 10 May 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHU, Xiaoli Telephone No. (86-10) 62411672 |

Form PCT/ISA /210 (second sheet) (July 2009)

## INTERNATIONAL SEARCH REPORT
Information on patent family members

International application No.

PCT/CN2018/075376

| Patent Documents referred in the Report | Publication Date | Patent Family | Publication Date |
|---|---|---|---|
| CN 102725752 A | 10 October 2012 | CN 102725752 B | 16 July 2014 |
| | | WO 2012083754 A1 | 28 June 2012 |
| CN 102841851 A | 26 December 2012 | CN 102841851 B | 09 September 2015 |
| CN 102063271 A | 18 May 2011 | CN 102063271 B | 13 August 2014 |

Form PCT/ISA /210 (patent family annex) (July 2009)